# FASCICULE DE BREVET EUROPEEN

(11) **EP 0 801 085 B1**
(45) Date de publication et mention de la délivrance du brevet: **22.01.2003**
(21) Numéro de dépôt: 97400590.2
(22) Date de dépôt: 17.03.1997
(51) Int. Cl.: C08F 267/10

(54) **Compositions de résines maléiques durcissables par ionisation et leur utilisation pour la fabrication de matériaux composites à renfort fibreux**
Zusammensetzungen aus Maleinharzen und ihre Anwendung in der Herstellung von durch Faser verstärkten Verbundwerkstoffen
Compositions of radiation curable maleic resins and their use in the preparation of composite materials reinforced with fibers

(30) Priorité: 19.03.1996 FR 9603395
(43) Date de publication de la demande: 15.10.1997
(73) Titulaire: AEROSPATIALE MATRA, 75016 Paris (FR)
(72) Inventeur: Boursereau, Frédéric Alexandre, 33110 Le Bouscat (FR); Dourthe, Patrice, 33130 Begles (FR)
(74) Mandataire: Audier, Philippe André

(56) Documents cités:
- EP-A- 0 598 575
- FR-A- 2 672 898
- US-A- 5 271 968

## Description

Cette invention concerne des compositions de résines maléiques durcissables par ionisation, utilisables en particulier pour la réalisation de pièces en matériaux composites à renfort fibreux, devant résister à des températures élevées.

Les matériaux composites auxquels s'applique l'invention sont des matériaux constitués d'une résine et d'un renfort destiné à leur conférer des propriétés particulières. Ces matériaux sont notamment constitués d'un renfort fibreux, minéral ou organique, assurant la résistance et la rigidité des pièces, et d'une matrice organique assurant la liaison entre les fibres de renfort ainsi que le transfert des efforts entre lesdites fibres. Les fibres du renfort sont en général en verre, silice, carbone, carbure ou carbonitrure de silicium, alumine ou aramide.

Ces matériaux composites peuvent être utilisés dans de nombreux secteurs industriels et notamment dans les domaines spatial, aéronautique, automobile, nautique et dans le domaine des sports de compétition. De façon générale, ces matériaux composites peuvent être utilisés pour la réalisation de pièces mécaniques légères de haute tenue mécanique.

Les matrices organiques utilisées pour la fabrication de matériaux composites sont généralement constituées d'une résine thermodurcissable, durcie sous de fortes pressions et de hautes températures nécessitant l'emploi d'un autoclave. (Le durcissement d'une résine correspond à sa polymérisation et/ou sa réticulation).

Les procédés de durcissement à chaud d'une résine donnent des matériaux composites très performants d'une point de vue mécanique, mais qui présentent des défauts dus aux effets thermiques tels que des contraintes internes, critiques et des délaminages dans le cas de pièces mécaniques épaisses. De plus, le temps de polymérisation est extrêmement long entraînant de lourdes conséquences financières du point de vue investissement et consommation d'énergie.

Les procédés de durcissement par ionisation au moyen de rayons X ou d'électrons sont intéressants car ils permettent une polymérisation et/ou réticulation sans élévation de température. Ainsi, on peut obtenir des matériaux composites de très bonne qualité en un temps relativement court et en utilisant des énergies relativement faibles. Par ailleurs, ces procédés de durcissement à froid sont compatibles avec tous les types de fibres entrant dans la composition des matériaux composites.

Les résines polymérisables par ionisation couramment utilisées dans les matériaux composites sont les résines à terminaison acrylique et plus particulièrement les résines époxy à terminaison acrylique.

Or, les résines époxy connues les plus performantes d'un point de vue mécanique et thermique présentent des températures de transition vitreuse de l'ordre de 200°C ; leur utilisation est donc limitée à des applications basses températures, et en particulier inférieures à 180°C.

Les résines thermodurcissables maléiques du type bismaléimide présentent l'avantage, par rapport aux résines époxy, d'une température de transition vitreuse, élevée, de l'ordre de 300°C, permettant leur utilisation dans des applications à hautes températures (supérieures à 250°C).

Les documents FR-A-2 672 896 et US-A- 5 403 907 illustrent des compositions de résines thermodurcissables maléiques, durcissables par ionisation et convenant à la réalisation de matériaux composites. Ces compositions comprennent une résine maléique de base obtenue par réaction de divers constituant, et elles peuvent être durcies par ionisation après leur avoir ajouté 10 à 50 parties en poids pour 100 parties en poids de résine, d'un diluant réactif constitué en particulier par la N-vinylpyrrolidone.

Le durcissement par ionisation peut être effectué avec des doses de 250 à 300 kGy, mais pour la fabrication de matériaux composites, il est nécessaire de compléter ce durcissement par ionisation, par un traitement thermique de post-cuisson à une température de 180 à 250°C pendant 2 à 8 heures.

La nécessité d'effectuer un tel traitement constitue un inconvénient, notamment pour la réalisation de pièces de dimensions importantes, en raison des difficultés de la mise en oeuvre qui nécessite des enceintes de traitement de dimensions importantes et conduit à des coûts élevés du point de vue investissement et consommation d'énergie.

La présente invention a précisément pour objet une composition de résine maléique durcissable par ionisation qui pallie cet inconvénient.

Selon l'invention, la composition durcissable par ionisation comprend une résine maléique et un diluant réactif constitué par au moins un composé choisi parmi le pentacrylate de dipentaérythritol et le méthacrylate d'hydroxyéthyle, la quantité totale de diluant réactif étant de 10 à 70 parties en poids pour 100 parties en poids de résine maléique.

Dans cette composition, le choix des diluants mentionnés ci-dessus permet d'obtenir le durcissement complet de la composition par ionisation, c'est-à-dire une conversion quasi totale des fonctions maléimides de la résine maléique, même lorsque celle-ci se trouve dispersée dans le renfort fibreux d'un matériau composite.

Ainsi, pour la fabrication de matériaux composites comprenant une matrice à base de résine maléique, il n'est plus nécessaire d'effectuer un traitement supplémentaire de post-cuisson du matériau, aprés le durcissement par ionisation.

Les résines maléiques utilisées dans la composition durcissable par ionisation de l'invention, sont des résines obtenues à partir de monomères bismaléimide. On utilise avantageusement les résines maléiques décrites dans les documents FR-A-2 672 896 et US-A-5 403 907.

Une résine maléique de ce type est constituée par le produit de réaction des constituants suivants :
- (a) un N,N'-bis -maléimide de formule : 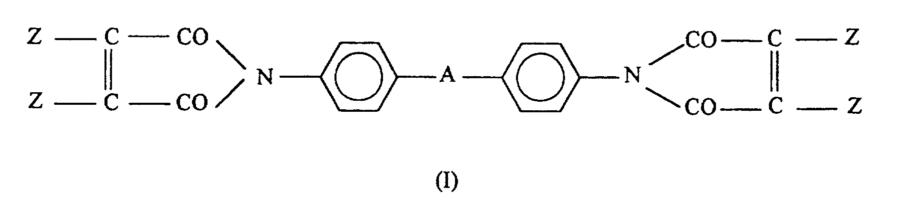 dans laquelle :
   - les symboles Z, identiques ou différents, représentent chacun CH₃ ou Cl ;
   - le symbole A représente une simple liaison ou un groupe choisi parmi :
      - CH₂- ; -C-(CH₃)₂-, -O- , -S- et -SO₂- ;
- (b) au moins un maléimide choisi parmi les composés de formules : 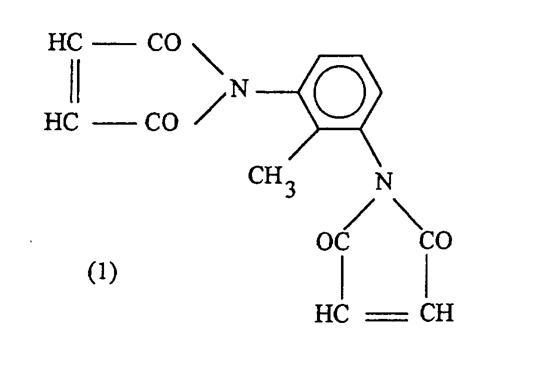 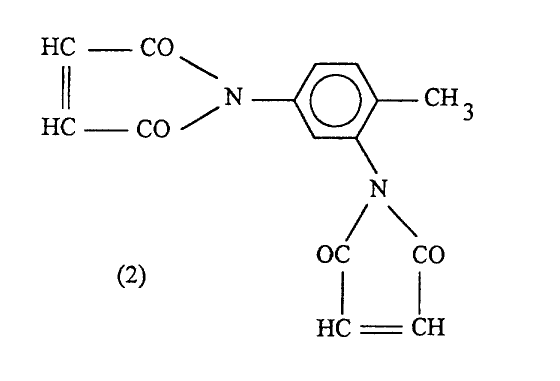 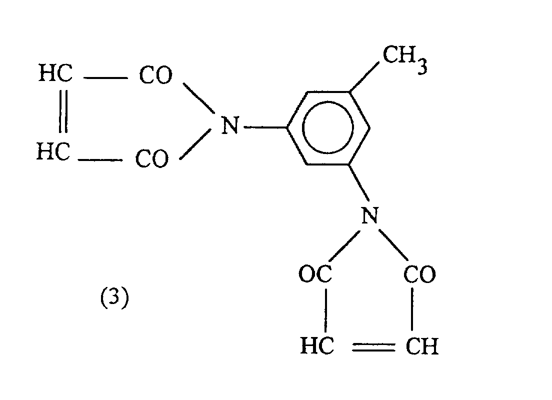 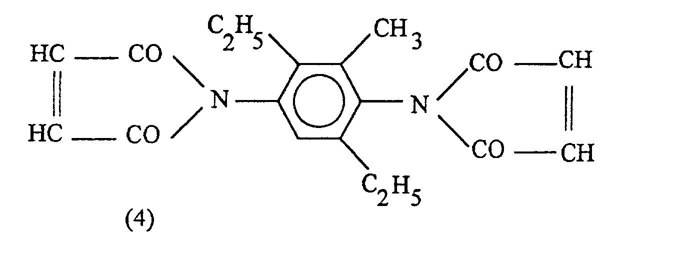 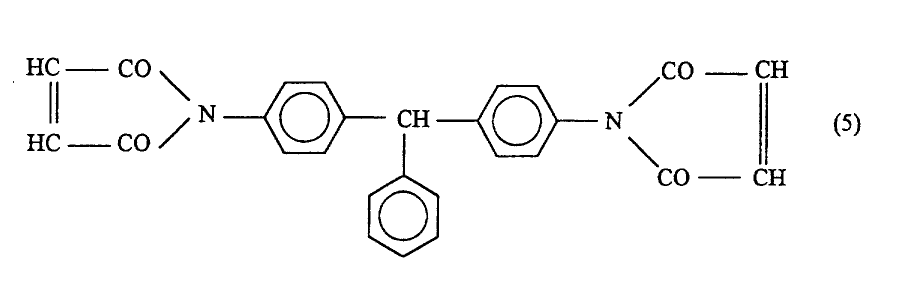 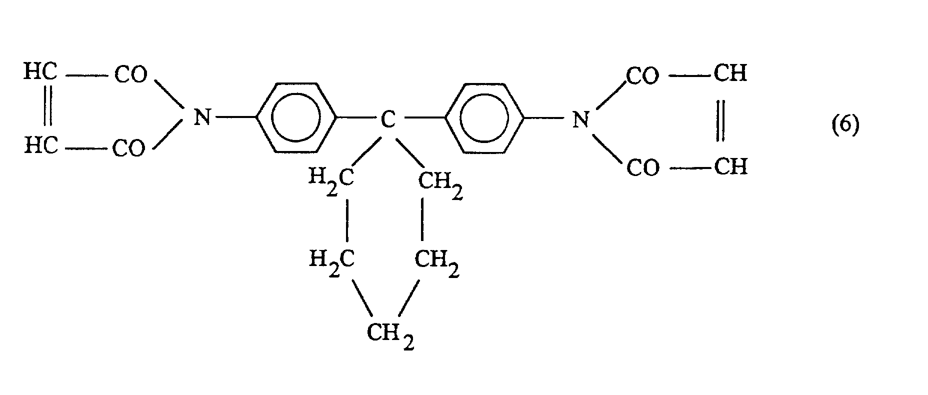 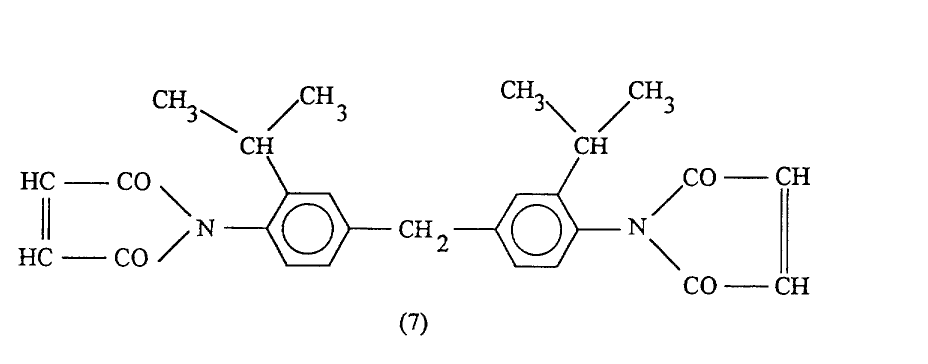 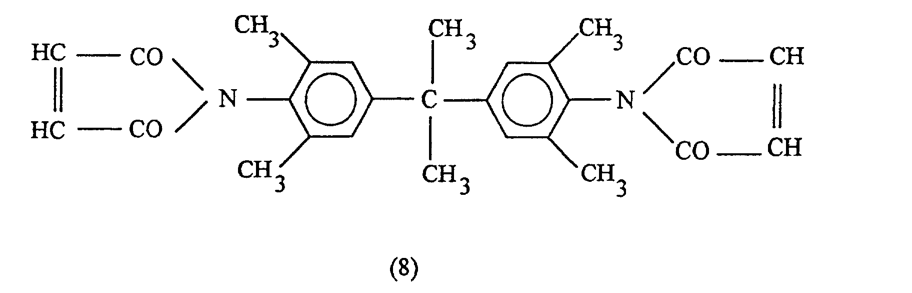 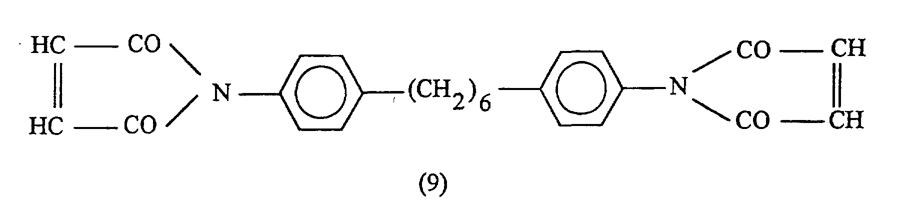 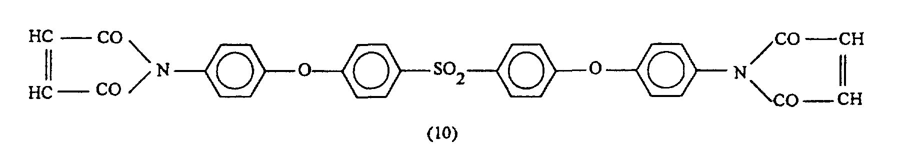 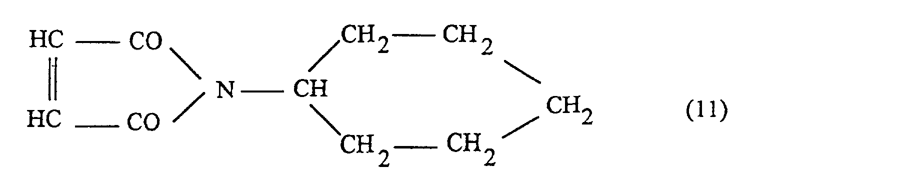
- (c) un réactif acrylate consistant en un ou plusieurs composé(s) de formule générale :

   (CH₂ = CR₁ - CO - O)ₙ―G (II)

   dans laquelle :
   - le symbole R₁ représente un atome d'hydrogène ou le groupe méthyle ;
   - n représente un nombre entier ou fractionnaire au moins égal à 1 et au plus égal à 8 ;
   - le symbole G représente un groupe organique de valence, constitué par un groupe hydrocarboné aliphatique saturé, linéaire ou ramifié, ayant de 1 à 30 atomes de carbone et pouvant renfermer un ou plusieurs atome(s) d'oxygène et/ou une ou plusieurs fonction(s) hydroxyle(s) libre(s) ; un groupe aromatique (de type arylique ou arylaliphatique) ayant de 6 à 150 atomes de carbone constitué par un noyau benzénique, pouvant être substitué par un à trois groupes alkyle ayant de 1 à 5 atomes de carbone, ou par plusieurs noyaux benzéniques, éventuellement substitués par 1 à 3 groupes alkyle de 1 à 5 atomes de carbone, reliés entre eux par une simple liaison, un groupe interte ou un groupe alkylène ayant de 1 à 3 atomes de carbone, ledit groupe aromatique pouvant renfermer à divers endroits de sa structure un ou plusieurs atome(s) d'oxygène et/ou une ou plusieurs fonction(s) hydroxyle(s) libre(s), le (ou les) valence(s) libre(s) du groupe G aromatique pouvant être portée(s) par un atome de carbone d'une chaîne aliphatique et/ou par un atome de carbone d'un noyau benzénique ; et
- (d) un réactif comprenant une double liaison vinylique choisi parmi les vinylpyridines, la N-vinylpyrrolidone-2, le vinyltétrahydrofuranne, le styrène et leurs mélanges.

Selon un mode préféré de réalisation de l'invention, on utilise une résine maléique de ce type dans laquelle le constituant (a) est le 4,4'-bis-maléimidediphénylméthane, le constituant (b) est le 1,3-bis-maléimidetoluène, le constituant (c) est un mélange des acrylates suivants :
- l'acrylate de formule : 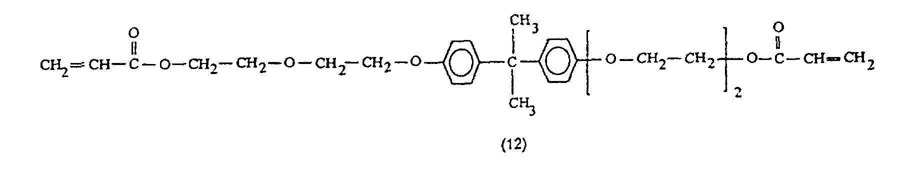
- l'acrylate de formule : 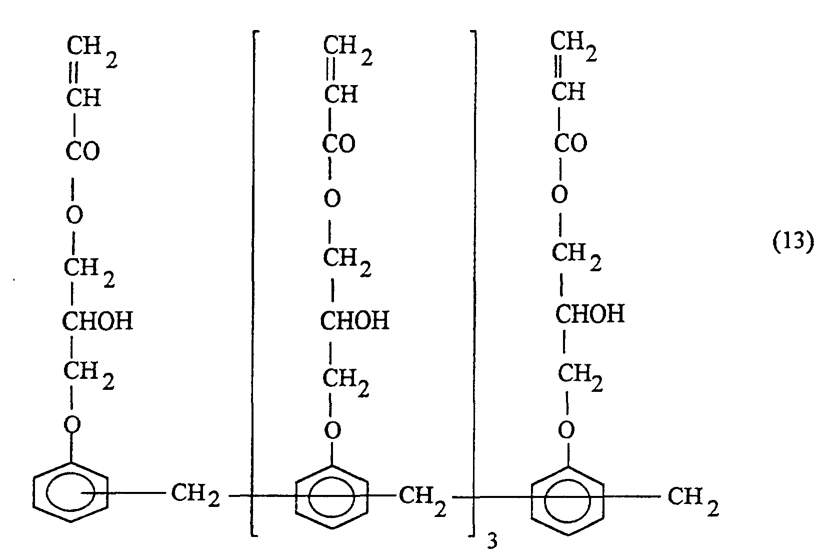
- le triacrylate de triméthylol propane,
et le constituant (d) est la 1-vinyl-2-pyrrolidone.

Les diluants réactifs utilisés dans les compositions durcissables de l'invention présentent de bonnes propriétés en vue d'une utilisation pour la fabrication de matériaux composites.

En effet pour cette fabrication, on imprègne généralement le renfort fibreux avec la composition durcissable à l'état liquide ; il est donc nécessaire que cette composition présente une viscosité appropriée à des températures modérées et ne soit pas détériorée par chauffage à cette température. En particulier, le diluant réactif ne doit pas être trop volatil à cette température. Par ailleurs, il est important que la composition durcie présente une bonne tenue thermique, soit une température de transition vitreuse Tg supérieure à 250°C. Enfin, il est essentiel d'obtenir un matériau composite présentant de bonnes propriétés mécaniques (contrainte à la rupture, déformation à la rupture et module de flexion).

Les quantités de diluant utilisées sont choisies de façon à optimiser ces propriétés en fonction de la nature du diluant utilisé. Généralement, on obtient de bons résultats avec 20 à 70, de préférence 20 à 50 et mieux encore de 30 à 40 parties en poids de diluant pour 100 parties en poids de résine maléique.

Dans le cas où l'on utilise le méthacrylate d'hydroxyéthyle (HEMA) de formule : 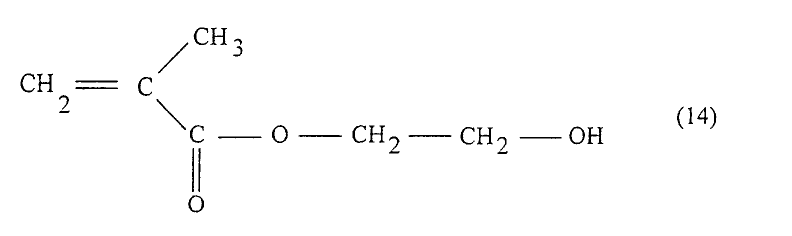 les propriétés de viscosité et de tenue thermique ainsi que les propriétés mécaniques sont totalement satisfaisantes. En revanche, ce diluant peut dans certains cas présenter une résistance insufissante à l'évaporation.

Dans le cas où l'on utilise comme diluant réactif le pentacrylate de dipentaérythritol, la tenue à l'évaporation de ce diluant est supérieur, les propriétés de viscosité des compositions sont bonnes et la tenue thermique du matériau durci est meilleure puisque Tg est supérieur à 350°C, mais les propriétés mécaniques sont légèrement inférieures, le matériau étant plus fragile car trop rigide.

Aussi, selon l'invention pour améliorer ces propriétés mécaniques, on peut ajouter à la composition durcissable un agent flexibilisant non volatil.

Dans ce cas, la composition comprend de préférence 10 à 50 parties en poids d'un agent flexibilisant pour 100 parties en poids de résine maléique.

Cet agent flexibilisant peut être constitué par une résine thermoplastique ou une résine bis-allylique. A titre d'exemple de résines thermoplastiques, on peut citer les résines uréthane-acrylates.

De préférence, on utilise comme agent flexibilisant une résine bis-allylique.

La présente invention a également pour objet un procédé de fabrication d'un matériau composite comportant un renfort fibreux dispersé dans une matrice organique qui comprend les étapes suivantes :
- 1) imprégner un renfort fibreux de la composition durcissable décrite ci-dessus, à une température de 30 à 90°C et,
- 2) durcir la composition par ionisation au moyen d'un faisceau d'électrons ou de rayons X.

Le renfort fibreux utilisé dans ce procédé peut être fabriqué par les techniques connues, utilisées généralement pour la fabrication de pièces en matériaux composites, telles que la coulée, le bobinage filamentaire, le drapage uni- ou multidirectionnel, la préimprégnation, l'injection etc. Généralement, on utilise des nappes préimprégnées de la composition durcissable que l'on assemble pour former la pièce de matériau composite. On réalise ensuite le durcissement par ionisation, en soumettant l'ensemble à une irradiation au moyen d'un faisceau d'électrons ou de rayons X. Ceci peut être effectué en utilisant le dispositif de polymérisation par ionisation décrit dans le document FR-A-2 564 029.

Le renfort fibreux peut être constitué de fils tissés, tressés ou bobinés d'alumine, de verre, de carbone, de carbure ou carbonitrure de silicium, d'alumino-silicate de bore, d'aramide, etc.

Les doses utilisées pour obtenir le durcissement se situent généralement dans la gamme de 100 à 350 kGy et de préférence de 250 à 350 kGy.

Ces doses peuvent être obtenues en faisant passer le renfort fibreux imprégné de la composition durcissable, à une certaine vitesse, sous le faisceau d'électrons ou de rayons X. Cette vitesse est fonction de la dose et des caractéristiques du dispositif ; soit D = K/V où D est la dose d'irradiation exprimée en kGy, K est un paramètre dépendant des caractéristiques (énergie et puissance) ainsi que des réglages du faisceau (fréquence de balayage, largeur de balayage, fréquence d'impulsion), et V représente la vitesse de passage du renfort imprégné.

Pour un accélérateur d'électrons de 10 MeV et d'une puissance de 10 kW, une dose de 10 kGy correspond à une vitesse de 2 m/min.

Etant donné que des doses plus importantes, correspondent à des vitesses très faibles (6 à 7 cm/min), vitesses qui sont difficiles à obtenir avec un moyen industriel, on utilise avantageusement une distribution des doses par passages successifs du mélange sous l'accélérateur. Le meilleur compromis se fait par passage unitaire de 50 kGy, ce qui correspond à une vitesse de 40 cm/min.

D'autres caractéristiques et avantages de l'invention apparaitront mieux à la lecture de la description qui suit d'exemples de réalisation donnés à titre illustratif et non limitatif, en référence aux dessins annexés.

La figure 1 est un diagramme qui illustre l'évolution de la viscosité en (Pa.s) en fonction du temps (en jours) à 23°C de compositions durcissables utilisant HEMA comme diluant réactif.

La figure 2 est un diagramme illustrant l'évolution de la viscosité (en Pa.s) en fonction du temps (en minutes) de diverses compositions durcissables.

La figure 3 est un diagramme représentant l'évolution du module de flexion (en GPa) en fonction de la température (en °C) de matériaux composites préparés avec les compositions de l'invention.

La figure 4 est un diagramme illustrant l'évolution du module de flexion (en MPa) en fonction de la température (en °C) de compositions conformes à l'invention durcies par ionisation.

La figure 5 est un diagramme illustrant l'évolution du module de flexion (en MPa) en fonction de la température (en °C) de compositions conformes à l'invention durcies par ionisation.

La figure 6 est un graphique illustrant les valeurs de contrainte et d'allongement à la rupture de trois compositions conformes à l'invention durcies par ionisation.

### EXEMPLE 1 : PREPARATION DE LA RESINE MALEIQUE DE BASE (RADIMID 10).

Cette résine est péparée à partir des constituants suivants.
- (a) 4,4'-bismaléimide diphénylméthane de formule : 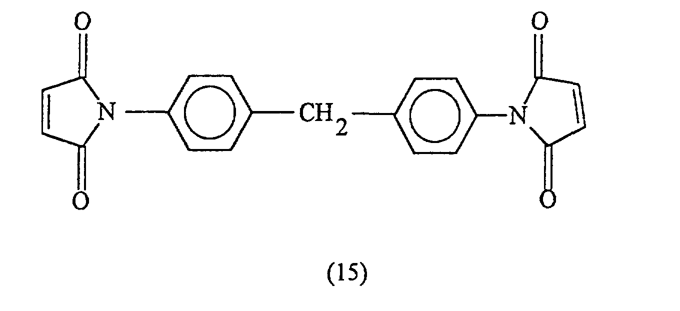
- (b) 1,3-bismaléimide Toluène (TBM) de formule : 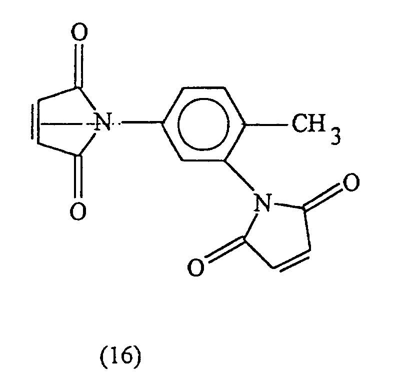
- (c) un mélange d'acrylates comprenant l'Ebecryl 150, acrylate de formule : 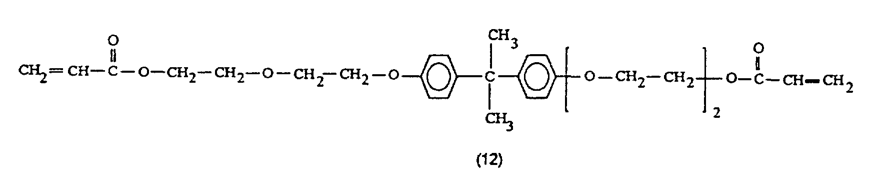 l'Ebecryl 629, acrylate formée lui-même d'un mélange des composés de formules suivantes : 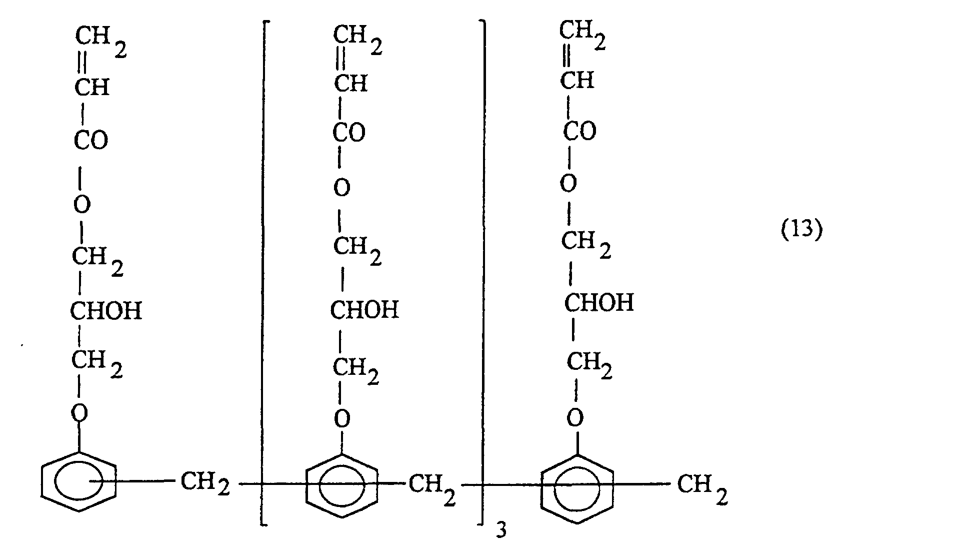 et 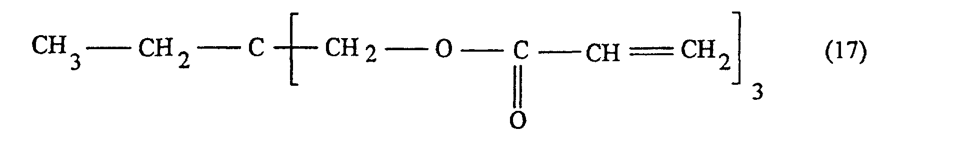 et
- (d) 1-vinyl-2-pyrrolidone, catalyseur de formule :

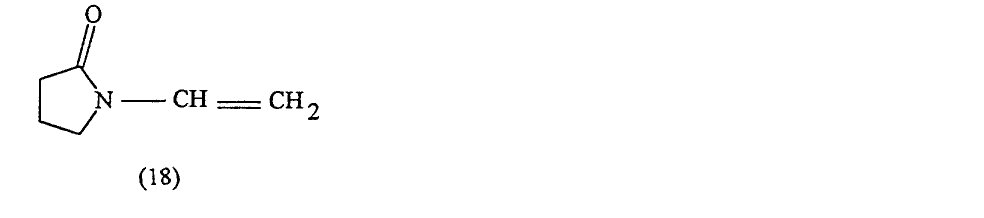

Pour cette préparation, on procède de la façon suivante :

### Etape 1

Dans un réacteur en verre de 350 cm³, muni d'un agitateur de type ancre en acier inoxydable et préchauffé par introduction dudit réacteur dans un bain d'huile porté à 165°C, on introduit en 12 minutes et sous agitation un mélange de :
- 165,33 g de N,N'-4,4'-diphénylméthane-bis-maléimide, et
- 69,56 g de N,N'-méthyl-4-phénylène-1,3-bis-maléimide.

On continue à agiter le mélange jusqu'à fusion complète des ingrédients engagés et obtention d'une masse liquide homogène ; la durée de cette agitation supplémentaire est de 5 minutes.

### Etape 2

On ajoute ensuite dans la masse liquide homogène 17,82 g de 1-vinyl-2-pyrrolidone, puis on laisse réagir l'ensemble sous agitation pendant 5 minutes.

### Etape 3

On sort le réacteur du bain d'huile chauffé, et on ajoute alors dans la masse réactionnelle toujours sous agitation un mélange de :
- 26,76 g d'EBERCRYL 150® de la société UCB, et
- 53,53 g du composé acrylate EBECRYL 629® (mélange de 80 % en poids de diacrylate d'époxy novolaque et de 20 % en poids de triacrylate de triméthylolpropane).

Après introduction des composés acrylates, on laisse réagir l'ensemble sous agitation pendant 3 minutes, puis on coule la masse réactionnelle obtenue dans un récipient métallique. Après refroidissment jusqu'à la température ambiante, on obtient la résine de base maléique, RADIMID 10, à l'état solide. Sa viscosité à 80°C est de 5,5 Pa.s. Cette résine est alors stockée à -18°C jusqu'à son utilisation.

### EXEMPLE 2 : COMPOSITIONS DURCISSABLES A BASE DE RESINE MALEIQUES ET DE METHACRYLATE D'HYDROXY ETHYLE (HEMA).

Dans cet exemple, on prépare les compositions durcissables 1 à 3 données dans le tableau 1 à partir de la résine maléique (Radimid 10) obtenue dans l'exemple 1, en lui ajoutant un diluant réactif constitué par le méthacrylate d'hydroxyéthyle HEMA.

Pour cette préparation, on utilise un réacteur à bain thermostaté que l'on chauffe tout d'abord à 110°C, puis on introduit dans le réacteur la résine Radimid 10, préalablement concassée qui a été stockée à -18°C. Dès que la résine atteint une température de 110°C, on maintient cette température pendant 10 minutes avant de refroidir la résine à 100°C, en maintenant le bain à une température de 80°C. On ajoute alors la quantité voulue de HEMA en 4 à 8 minutes en maintenant le bain à 80°C. Dès que la composition atteint 85°C, on recueille celle-ci pour la stocker.

On détermine ensuite la viscosité et la durée de vie en pot, à une température de 23°C, de 3 compositions conformes à l'invention obtenues de cette façon, qui comprennent respectivement 20 parties en poids de HEMA (composition 1), 30 parties en poids de HEMA (composition 2) et 40 parties en poids de HEMA (composition 3), pour 100 parties en poids de résine Radimid (voir tableau 1).

La durée de vie en pot est le temps pendant lequel, à une température donnée, la viscosité du mélange résine-diluant réactif ne bouge pas ou pratiquement pas.

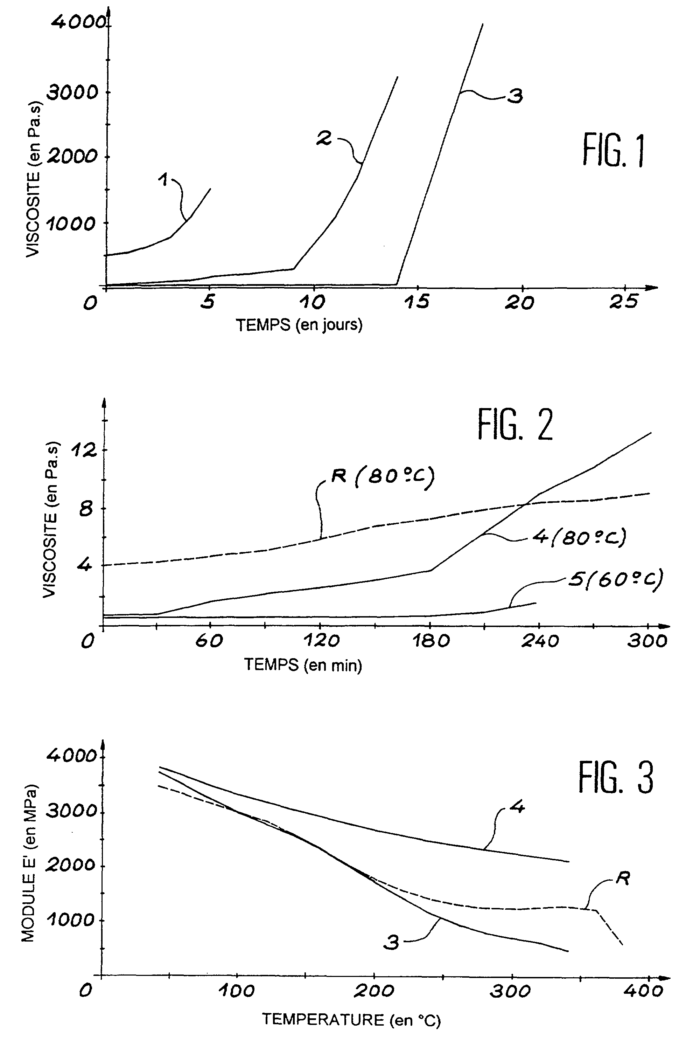

Les résultats obtenus sont donnés sur la figure 1 qui illustre la viscosité (en Pa.s) à 23°C en fonction du temps (en jours) des compositions 1, 2 et 3.

Sur cette figure, la courbe 1 se rapporte à la composition 1, la courbe 2 se rapporte à la composition 2 et la courbe 3 à la composition 3.

Ainsi, on remarque que la durée de vie à température ambiante est d'autant plus importante que le taux de HEMA est élevé. En effet, la durée de vie en pot est de :
- 1 jour pour la composition 1,
- 9 jours pour la composition 2, et
- 14 jours pour la composition 3.

Par ailleurs, les viscosités de départ à 23°C sont les suivantes :
Composition 1 : 560 Pa.s,
Composition 2 : 64 Pa.s,
Composition 3 : 15 Pa.s.

### EXEMPLE 3 : PREPARATION DE MATERIAUX COMPOSITES AU MOYEN DE COMPOSITIONS RADIMID-HEMA.

Dans cet exemple, on prépare des matériaux composites à partir de nappes unidimensionnelles de fibres de carbone (T800-H). Tout d'abord, on réalise des pré-imprégnés en utilisant les compositions durcissables 1, 2 et 3 de l'exemple 2, puis on prépare des plaques à partir des nappes préimprégnées en empilant 16 nappes à 0°C. Après compression des nappes, on les soumet à une polymérisation par ionisation au moyent d'un accélérateur d'électrons en appliquant une dose de 300 kGy, par passages successifs à une dose de 50 kGy.

Les conditions d'imprégnation et les propriétés mécaniques des composites obtenus sont données dans le tableau 2 qui suit.

### EXEMPLE 4 : COMPOSITION DURCISSABLE A BASE DE RESINE MALEIQUE ET DE PENTACRYLATE (COMPOSITION 4).

Dans cet exemple, on suit le même mode opératoire que dans l'exemple 2, pour préparer une composition durcissable par ionisation à partir de la résine Radimid 10 de l'exemple 1, mais en utilisant comme diluant réactif le pentacrylate de dipentaérythritol RCP 3048 de formule : 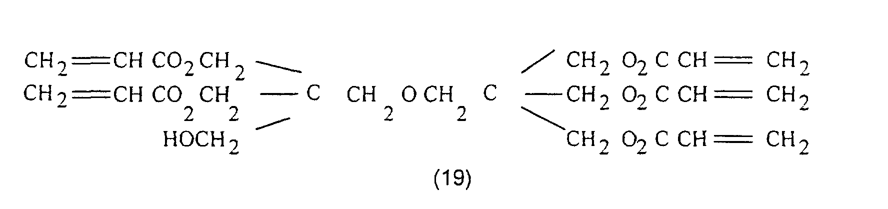 à raison de 40 parties en poids pour 100 parties en poids de résine.

On obtient une composition durcissable présentant une viscosité appropriée et une durée de vie acceptable.

La viscosité de cette composition à 80°C en fonction du temps est illustrée sur la figure 2 (courbe 4). Sur cette figure, la courbe R donnée à titre comparatif se rapporte à la résine Radimid seule à 80°C.

### EXEMPLE 5 : COMPOSITION DURCISSABLE A BASE DE RESINE MALEIQUE, DE PENTACRYLATE ET DE HEMA (COMPOSITION 5).

On suit le même mode opératoire que dans l'exemple 2 pour préparer une composition comprenant pour 100 parties en poids de la résine Radimid 10 de l'exemple 1, 40 parties en poids de pentacrylate RCP 3048 et 30 parties en poids de HEMA.

L'évolution de la viscosité (en Pa.s) à 60°C en fonction du temps (en minute) de cette composition est illustrée sur la figure 2 (courbe 5). Cette composition a une viscosité très inférieure à celle de la résine Radimid seule et de la composition 4.

Dans le tableau 1, on a regroupé les compositions pondérales des compositions préparées dans les exemples 1 à 5.

### EXEMPLE 6 : PROPRIETES MECANIQUES DE COMPOSITIONS DURCIES PAR IONISATION.

Dans cet exemple, on réalise le durcissement par ionisation des compositions 2, 3 et 4 en utilisant une dose de 300 kGy par passes successives de 50 kGY comme dans l'exemple 3.

On détermine ensuite la contraine à la rupture, la déformation à la rupture et le module de flexion des compositions durcies 2 et 4 ainsi obtenues.

Ces résultats sont donnés dans le tableau 2 qui suit.

On remarque ainsi que les propriétés mécaniques sont inférieures lorsqu'on utilise comme diluant réactif le pentacrylate RCP 3048 au lieu du méthacrylate d'hydroxyéthyle.

Comme on le verra plus loin, ces propriétés peuvent être améliorées en ajoutant un agent flexibilisant à la composition durcissable.

Sur la figure 3, on a représenté l'évolution du module de flexion (en MPa) des compositions 3 et 4 durcies en fonction de la température (en °C).

A titre comparatif, on a également représenté sur cette figure le module de flexion de la résine Radimid seule durcie dans les mêmes conditions.

Sur cette figure, la courbe 3 se rapporte à la composition durcissable 3, la courbe 4 à la composition durcissable 4 et la courbe R à la résine maléique Radimid seule.

On remarque ainsi que la tenue thermique est bien meilleure lorsqu'on utilise comme diluant réactif le pentacrylate RCP 3048.

### EXEMPLE 7 : PREPARATION DE MATERIAUX COMPOSITES A PARTIR DES COMPOSITIONS 2 et 4.

On suit le même mode opératoire que dans l'exemple 3 pour préparer des matériaux composites à partir des compositions durcissables 2, 4 et 5 en réalisant le durcissement avec une dose de 300 kGy par passes successives de 50 kGy.

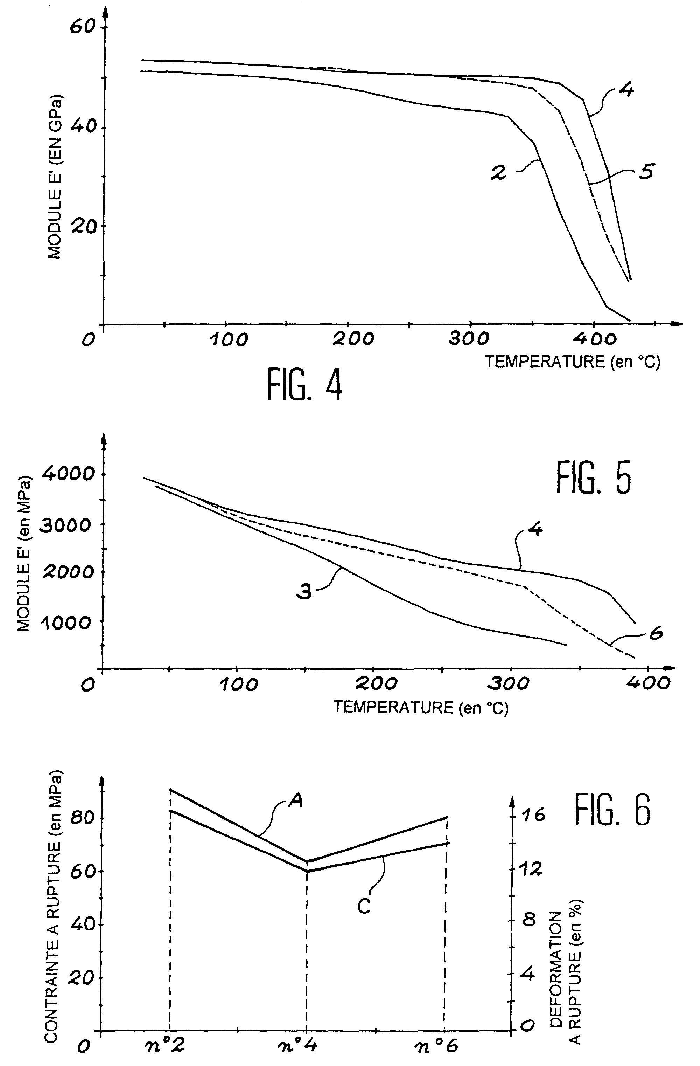

Sur la figure 4, on a représenté l'évolution du module de flexion en (GPa) des composites obtenus en fonction de la température (en °C). Les courbes 2, 4 et 5 se réfèrent respectivement aux composites utilisant les compositions 2, 4 et 5.

On remarque ainsi que, dans le cas des composites, les propriétés mécaniques sont dégradées après 300°C, lorsqu'on utilise comme diluant réactif HEMA (courbe 2) alors que dans le cas du pentacrylate (courbes 4 et 5), on a une bonne tenue thermique jusqu'à une température supérieure à 350°C.

### EXEMPLE 8 : COMPOSITION DURCISSABLE COMPRENANT UN AGENT FLEXIBILISANT.

Dans cet exemple, on prépare une nouvelle composition durcissable par ionisation en suivant le même mode opératoire que dans l'exemple 4, mais en ajoutant de plus 20 parties en poids d'agent flexibilisant (résine bis-allylique) pour 100 parties en poids de résine maléimide. On obtient ainsi la composition 6 qui a la composition pondérale suivante :

100 parties de résine Radimid, 40 parties de pentracrylate RCP 3048 et 20 parties de résine bis-allylique TM121 de formule :

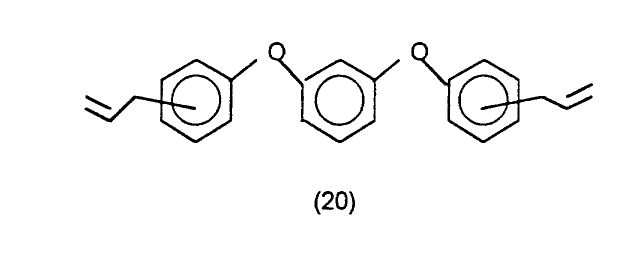

Cette composition est également donnée dans le tableau 1.

On détermine ensuite les propriétés mécaniques de cette composition après durcissement par ionisation sous une dose de 300 kGy par passes successives de 50 kGy. Les résultats obtenus sont donnés dans le tableau 3. Au vu de ce tableau, on remarque que la composition 6 donne des performances sensiblement équivalentes à celle de la composition 2.

Ainsi, la présence de l'agent flexibilisant améliore les propriétés mécaniques des compositions utilisant du pentacrylate en les rendant moins fragiles.

Sur la figure 5, on a représenté l'évolution du module de flexion en (MPa)en fonction de la température (en °C) pour la composition 6 (courbe 6) durcie sous une dose de 300 kGy. Sur cette figure, les courbes 3 et 4 illustrent les résultats obtenus dans les même conditions avec les compositions 3 et 4 durcies à une dose de 300 kGy.

La figure 6 illustre sous forme graphique les résultats du tableau 2, en ce qui concerne la contrainte à la rupture (en MPa) (graphique C) et l'allongement à la rupture (en %) (graphique A).

Sur ce graphique, on constate que les meilleurs résultats sont obtenus dans le cas des compositions 2 et 6.

**TABLEAU 1**

| **Composition** | **Radimid 10 (résine maléique de l'exemple 1)** | **Méthacrylate d'hydroxyéthyle (HEMA)** | **Pentacrylate (RCP 3048)** | **Bisallylique (TM121)** |
|---|---|---|---|---|
| N°1 | 100 | 20 | | |
| N°2 | 100 | 30 | | |
| N°3 | 100 | 40 | | |
| N°4 | 100 | | 40 | |
| N°5 | 100 | 30 | 40 | |
| N°6 | 100 | | 40 | 20 |

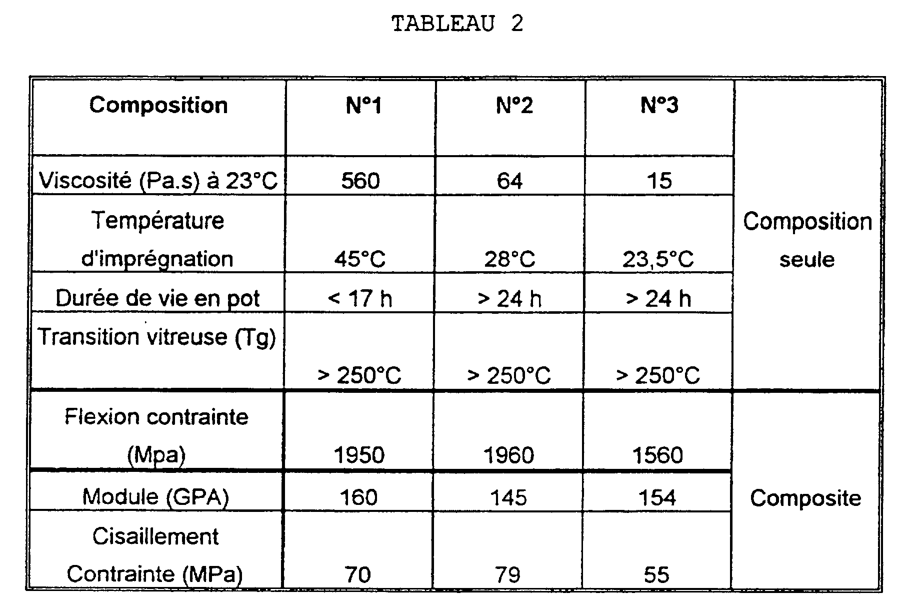

**TABLEAU 3**

| **Composition** | **Contrainte à la rupture (MPa)** | **Déformation à la rupture (%)** | **Module de flexion (MPa)** |
|---|---|---|---|
| 2 | 82 | 1,90 | 4200 |
| 4 | 60 | 1,30 | 4200 |
| 6 | 72 | 1,62 | 4340 |

## Revendications

1. Composition durcissable par ionisation comprenant une résine maléique et un diluant réactif constitué par au moins un composé choisi parmi le pentacrylate de dipentaérythritol et le méthacrylate d'hydroxyéthyle, la quantité totale de diluant réactif étant de 10 à 70 parties en poids pour 100 parties en poids de résine maléique.

2. Composition selon la revendication 1, dans laquelle la résine maléique est le produit de réaction des constituants suivants :
- (a) un N,N'-bis -maléimide de formule : 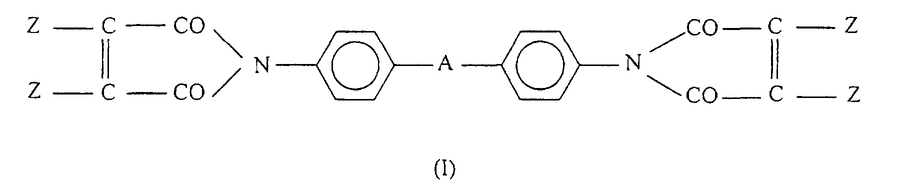 dans laquelle :
- les symboles Z, identiques ou différents, représentent chacun CH₃ ou Cl ;
- le symbole A représente une simple liaison ou un groupe choisi parmi :
- CH₂- ; -C-(CH₃)₂-, -O- , -S- et -SO₂- ;
- (b) au moins un maléimide choisi parmi les composés de formules : 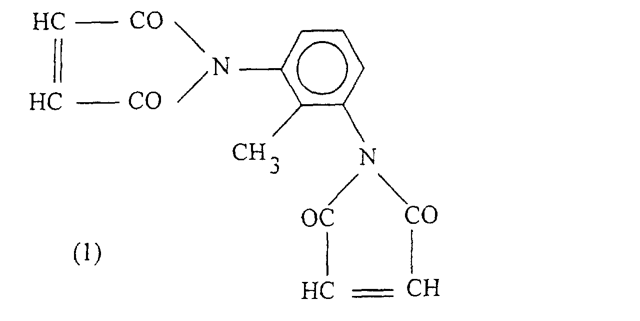 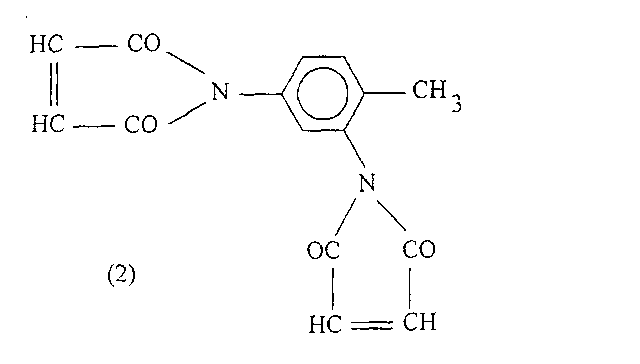 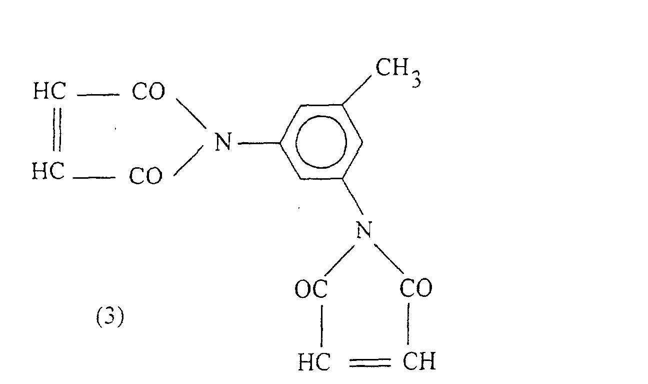 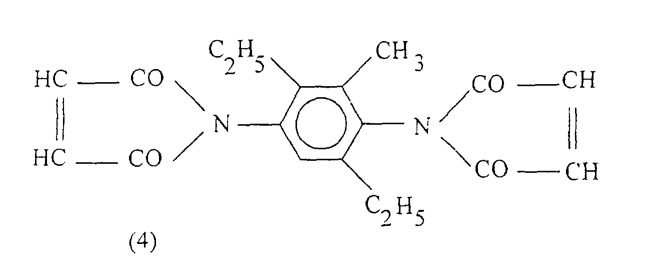 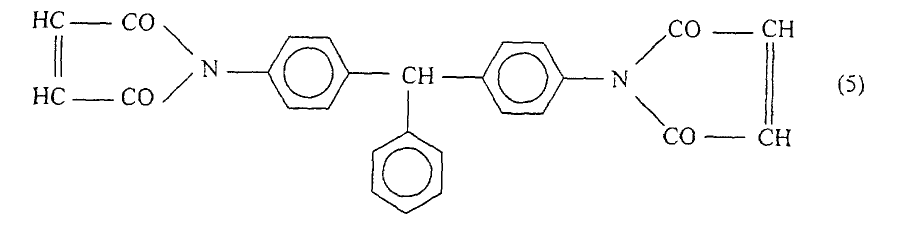 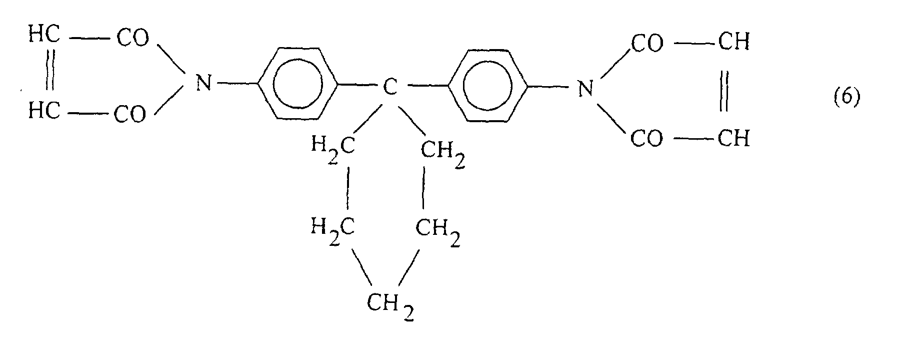 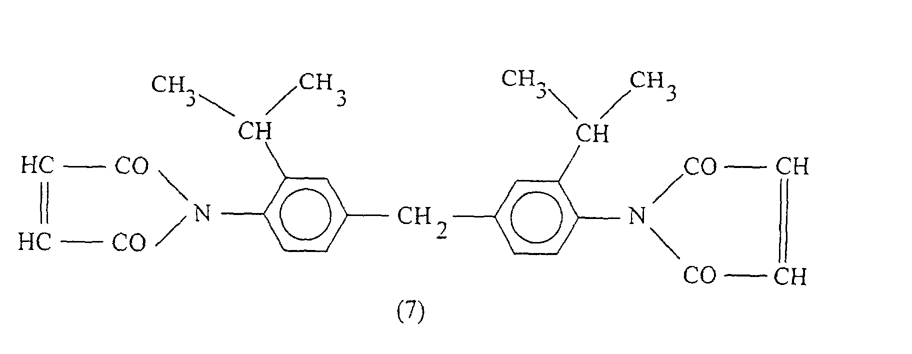 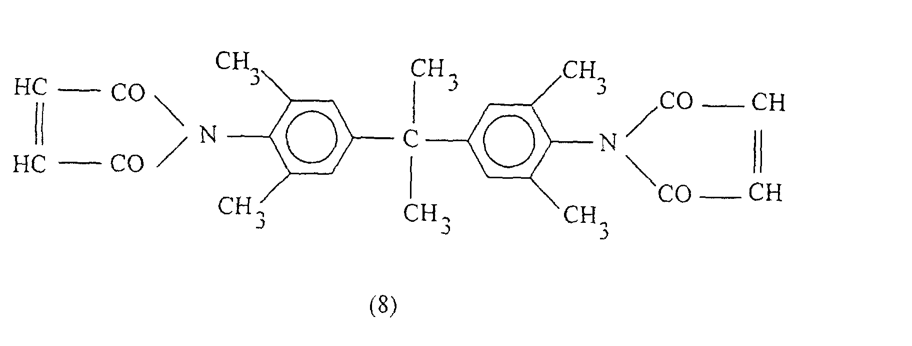 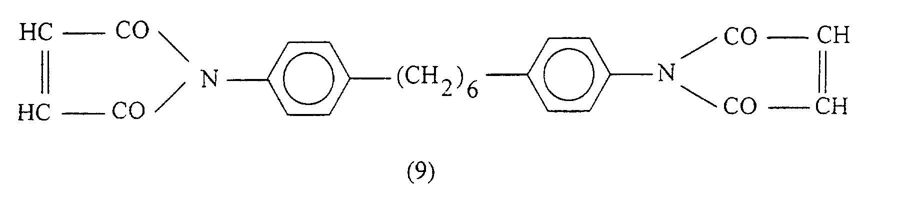 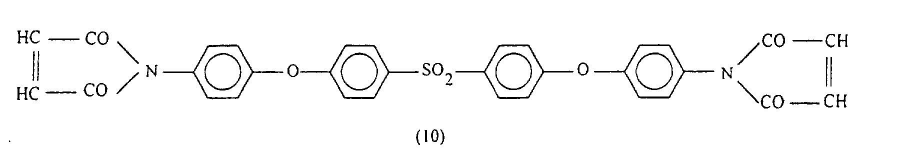 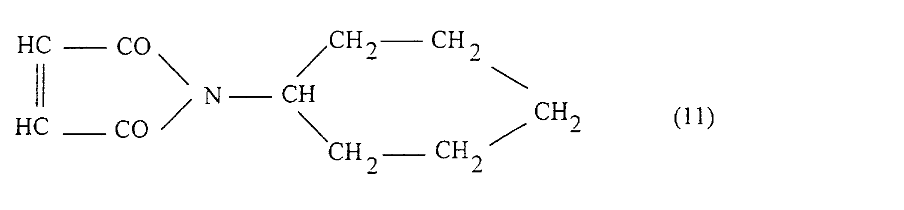
- (c) un réactif acrylate consistant en un ou plusieurs composé(s) de formule générale :
(CH₂ = CR₁ - CO - O)ₙ―G (II)
dans laquelle :
- le symbole R₁ représente un atome d'hydrogène ou le groupe méthyle ;
- n représente un nombre entier ou fractionnaire au moins égal à 1 et au plus égal à 8 ;
- le symbole G représente un groupe organique de valence, constitué par un groupe hydrocarboné aliphatique saturé, linéaire ou ramifié, ayant de 1 à 30 atomes de carbone et pouvant renfermer un ou plusieurs atome(s) d'oxygène et/ou une ou plusieurs fonction(s) hydroxyle(s) libre(s) ; un groupe aromatique (de type arylique ou arylaliphatique) ayant de 6 à 150 atomes de carbone constitué par un noyau benzénique, pouvant être substitué par un à trois groupes alkyle ayant de 1 à 5 atomes de carbone, ou par plusieurs noyaux benzéniques, éventuellement substitués par 1 à 3 groupes alkyle de 1 à 5 atomes de carbone, reliés entre eux par une simple liaison, un groupe interte ou un groupe alkylène ayant de 1 à 3 atomes de carbone, ledit groupe aromatique pouvant renfermer à divers endroits de sa structure un ou plusieurs atome(s) d'oxygène et/ou une ou plusieurs fonction(s) hydroxyle(s) libre(s), le (ou les) valence(s) libre(s) du groupe G aromatique pouvant être portée(s) par un atome de carbone d'une chaîne aliphatique et/ou par un atome de carbone d'un noyau benzénique ; et
- (d) un réactif comprenant une double liaison vinylique choisi parmi les vinylpyridines, la N-vinylpyrrolidone-2, le vinyltétrahydrofuranne, le styrène et leurs mélanges.

3. Composition selon la revendication 2, dans laquelle le constituant (a) est le 4,4'-bis-maléimide diphényl méthane, le constituant (b) est le 1,3-bis-maléimide toluène, le constituant (c) est un mélange des acrylates suivants :
- l'acrylate de formule : 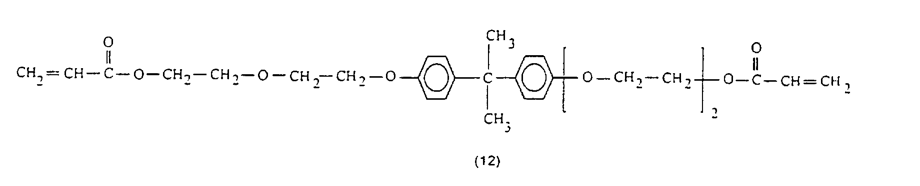
- l'acrylate de formule : 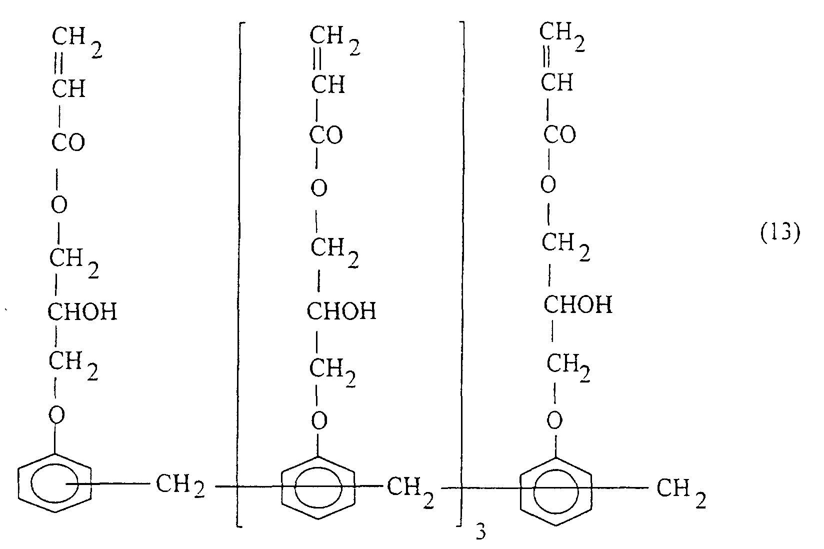
- le triacrylate de triméthylol propane,
et le constituant (d) est la 1-vinyl-2-pyrrolidone.

4. Composition selon l'une quelconque des revendications 1 à 3, comprenant 20 à 50 parties en poids de diluant réactif pour 100 parties en poids de résine maléique.

5. Composition selon l'une quelconque des revendications 1 à 4, comprenant en outre 10 à 50 parties en poids d'un agent flexibilisant pour 100 parties en poids de résine maléique.

6. Composition selon la revendication 5, dans laquelle l'agent flexibilisant est une résine bis-allylique.

7. Composition selon la revendication 6, comprenant 40 parties en poids de pentacrylate de dipentaérythritol et 20 parties en poids de résine bis-allylique pour 100 parties en poids de résine maléique.

8. Procédé de fabrication d'un matériau composite comportant un renfort fibreux dispersé dans une matrice organique, caractérisé en qu'il comprend les étapes suivantes :
- 1) imprégner un renfort fibreux d'une composition durcissable selon l'une quelconque des revendications 1 à 7, à une température de 30 à 90°C et,
- 2) durcir la composition par ionisation au moyen d'un faisceau d'électrons ou de rayons X.

9. Procédé selon la revendication 8, dans lequel la dose d'ionisation utilisée dans la deuxième étape est de 100 à 350 kGy.

10. Procédé selon l'une quelconque des revendications 8 et 9, dans lequel le renfort fibreux est constitué de fibres de carbone.

## Patentansprüche

1. Mittels Ionisation aushärtbares Gemisch, das ein Maleinharz und ein reaktives Verdünnungsmittel umfaßt, welches aus mindestens einer Verbindung besteht, die unter Dipentaerythritolpentacrylat und Hydroxyethylmethacrylat ausgewählt wird, wobei sich die Gesamtmenge des reaktiven Verdünnungsmittels auf 10 bis 70 Gewichtsanteile pro 100 Gewichtsanteilen Maleinharz beläuft.

2. Gemisch gemäß Anspruch 1, bei dem das Maleinhärz das Reaktionsprodukt der folgenden Komponenten ist:
- (a) ein N,N'-β-Maleinimid mit folgender Formel: 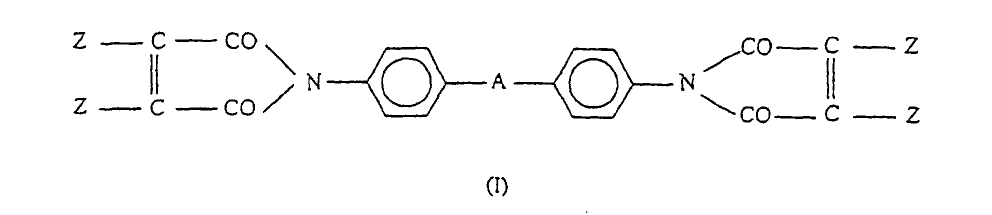 bei der folgendes gilt:
- die Symbole Z, die identisch oder verschieden sein können, bezeichnen jeweils CH₃ oder Cl;
- das Symbol A steht für eine einfache Bindung oder eine Gruppe, die unter den folgenden ausgewählt wird:
-CH₂-; -C-(CH₃)₂-; -O-; -S- und -SO₂-;
- (b) mindestens ein Maleinimid, das unter den folgenden Formelverbindungen ausgewählt wird: 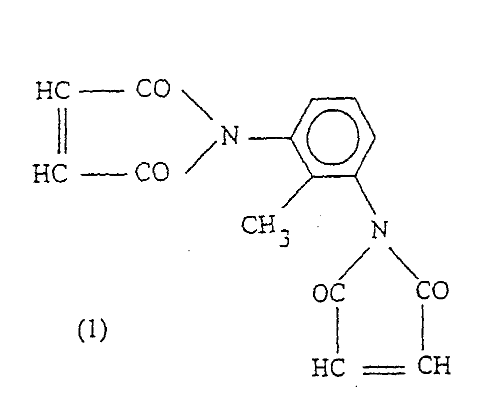 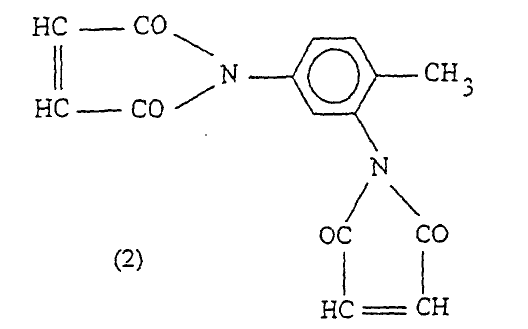 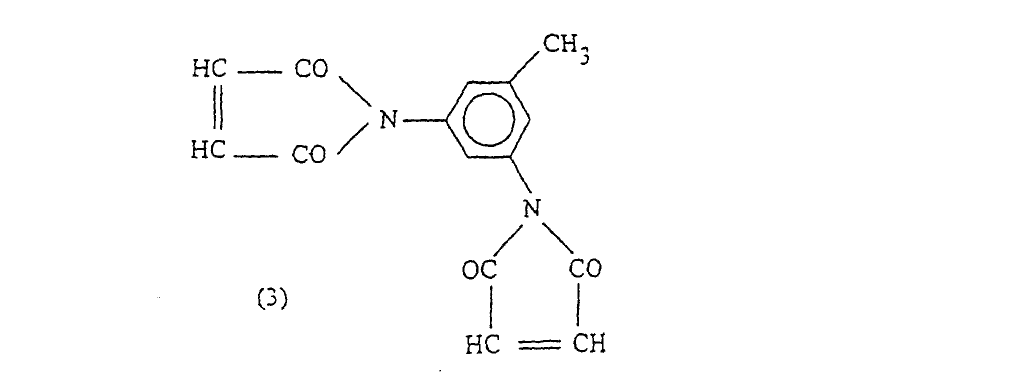 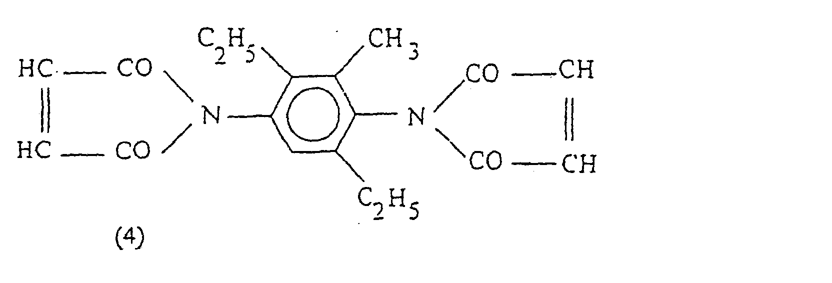 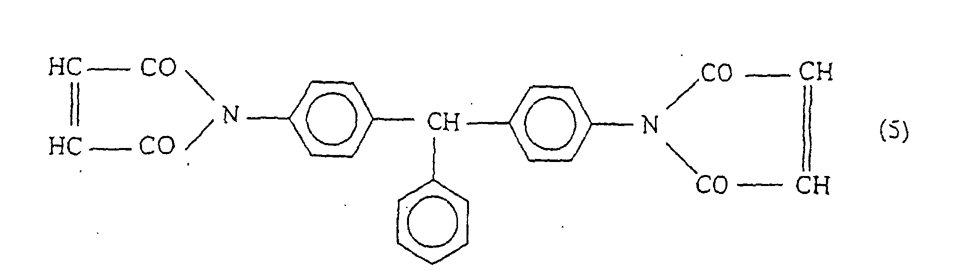 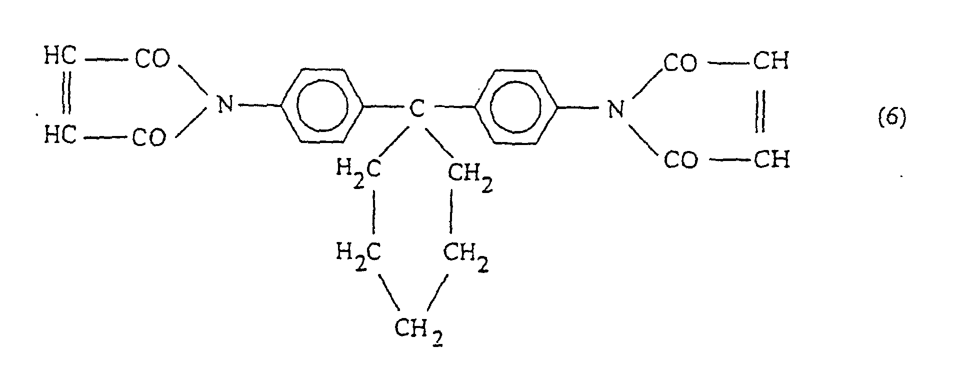 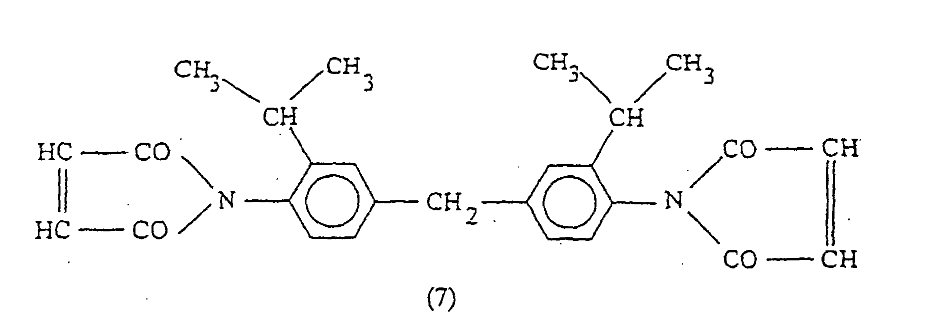 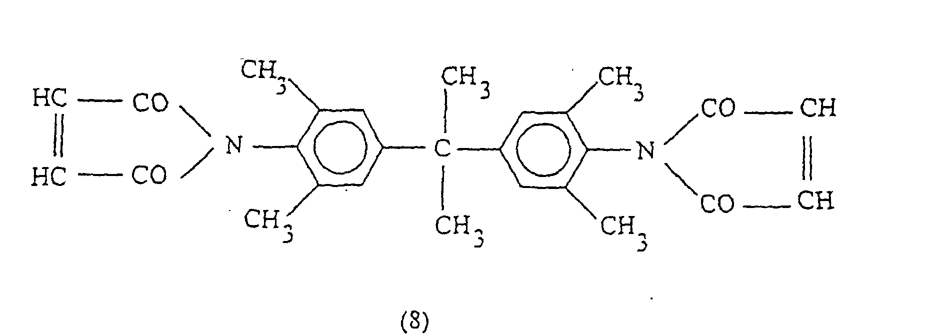 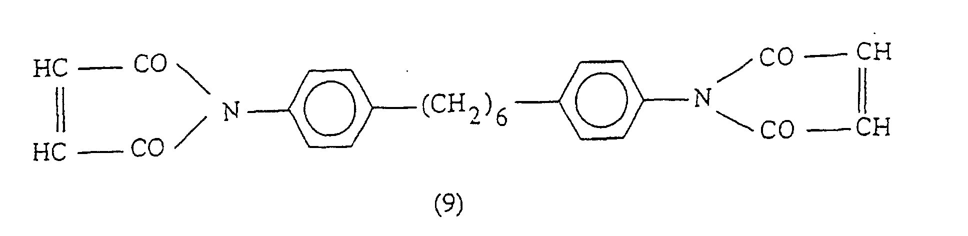 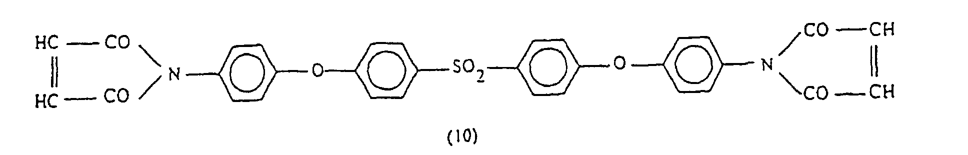 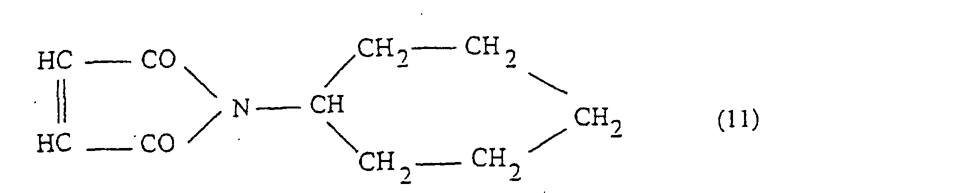
- (c) eine reaktive Acrylatkomponente, bestehend aus einer oder mehreren Verbindungen mit folgender allgemeiner Formel:
(CH₂ = CR₁ - CO - O)ₙ―G (II)
bei der folgendes gilt:
- das Symbol R₁ steht für ein Wasserstoffatom oder die Methylgruppe;
- n steht für eine ganze oder gebrochene Zahl zwischen 1 und maximal 8;
- das Symbol G steht für eine organische Gruppierung, bestehend aus einer linearen oder verzweigten gesättigten aliphatischen Gruppe mit 1 bis 30 Kohlenstoffatomen, die ein oder mehrere Sauerstoffatome und/oder eine oder mehrere ungebundene Hydroxylfunktionen einschließen kann; einem aromatischen Strukturfragment (vom arylischen oder arylaliphatischen Typ) mit 6 bis 150 Kohlenstoffatomen, die in Form eines Benzolkerns vorliegen, der durch 1 bis 3 Alkylgruppen mit 1 bis 5 Kohlenstoffatomen substituiert sein kann, oder in Form mehrerer untereinander durch Einfachbindung verknüpfter Benzolkerne, die eventuell durch 1 bis 3 Alkylgruppen mit 1 bis 5 Kohlenstoffatomen substituiert sein können, eine inerte Gruppe oder Alkylengruppe mit 1 bis 3 Kohlenstoffatomen, wobei das besagte aromatische Strukturfragment an verschiedenen Positionen seiner Struktur ein oder mehrere Sauerstoffatome und/oder eine oder mehrere ungebundene Hydroxylfunktionen einschließen kann und wobei die ungebundene(n) Valenz(en) der aromatischen Gruppierung G durch ein Kohlenstoffatom einer aliphatischen Kette und/oder durch ein Kohlenstoffatom eines Benzolkerns gebunden werden kann/können; und
- (d) eine reaktive Komponente, die eine Vinyldoppelbindung besitzt und unter den Vinylpyridinen, N-Vinylpyrrolidon-2, Vinyltetrahydrofuran, Styrol und deren Mischungen ausgewählt wird.

3. Gemisch gemäß Anspruch 2, bei dem die Komponente (a) in Form von 4,4'-β-Maleinimidbiphenylmethan, die Komponente (b) in Form von 1,3-β-Maleinimidtoluol und die Komponente (c) in Form eines Gemischs der folgenden Acrylate:
- Acrylat der Formel: 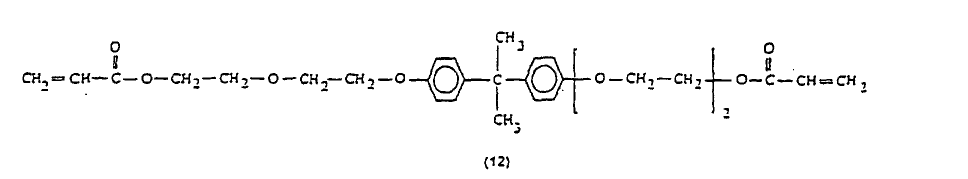
- Acrylat der Formel: 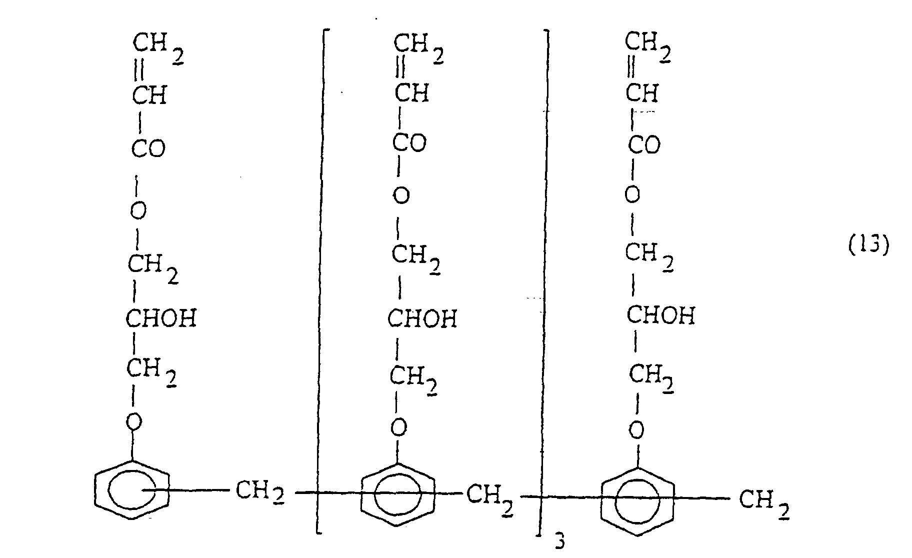
- Trimethylolpropantriacrylat,
und die Komponente (d) in Form von 1-Vinyl-2-Pyrrolidon vorliegen.

4. Gemisch gemäß einem der Ansprüche 1 bis 3, das 20 bis 50 Gewichtsanteile reaktives Verdünnungsmittel pro 100 Gewichtsanteilen Maleinharz umfaßt.

5. Gemisch gemäß einem der Ansprüche 1 bis 4, das des weiteren 10 bis 50 Gewichtsanteile einer flexibilisierenden Komponente pro 100 Gewichtsanteilen Maleinharz umfaßt.

6. Gemisch gemäß Anspruch 5, **dadurch gekennzeichnet, daß** es sich bei dem flexibilisierenden Mittel um ein Diallylharz handelt.

7. Gemisch gemäß Anspruch 6, das 40 Gewichtsanteile Dipentaerythritolpentacrylat und 20 Gewichtsanteile Diallylharz pro 100 Gewichtsanteilen Maleinharz umfaßt.

8. Verfahren zur Herstellung eines Composite-Materials, das ein in einer organischen Matrix dispergiertes Faserverstärkungsmaterial enthält, **dadurch gekennzeichnet, daß** es die folgenden Schritte umfaßt:
- 1) Imprägnierung eines Faserverstärkungsmaterials mit einem aushärtbaren Gemisch gemäß einem der Ansprüche 1 bis 7 bei einer Temperatur von 30 bis 90 °C und
- 2) Aushärtungs des Gemischs durch Ionisation mittels Elektronen- oder Röntgenstrahlung.

9. Verfahren gemäß Anspruch 8, **dadurch gekennzeichnet, daß** die beim zweiten Schritt genutzte Ionisationsdosis 100 bis 350 kGy beträgt.

10. Verfahren gemäß einem der Ansprüche 8 und 9, **dadurch gekennzeichnet, daß** die für die Verstärkung genutzten Fasern aus Kohlenstoff bestehen.

## Claims

1. Ionization-setting composition comprising a maleic resin and a reactive diluent made up of at least one compound chosen from among dipentaerythritol pentacrylate and hyroxyethyl methacrylate, the total quantity of reactive diluent being between 10 and 70 parts by weight per 100 parts by weight of maleic resin.

2. Composition in accordance with claim 1, in which the maleic resin is the product resulting from the reaction of the following constituents :
(a) a N,N' -bis -maleimide with the formula : 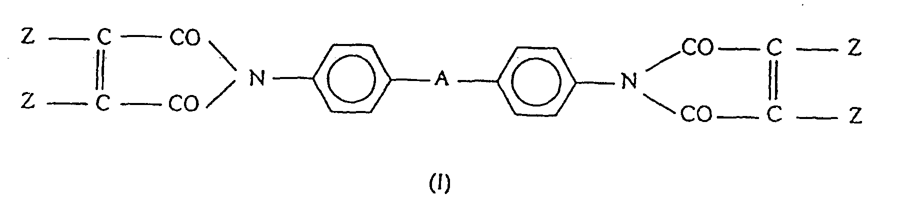 in which :
- the Z symbols, identical or different, each represent CH₃ or Cl ;
- the A symbol represents a single bond or a group chosen from among :
CH₂- ; -C- (CH₃)₂- , -O- , -S- and -SO₂- ;
(b) at least one maleimide chosen from among the compounds with the formulae : 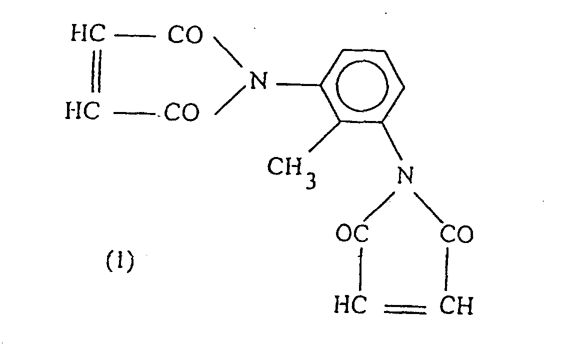 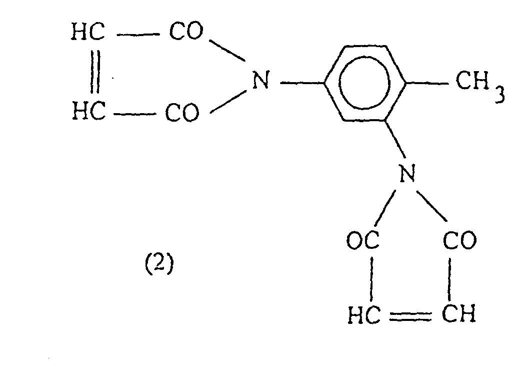 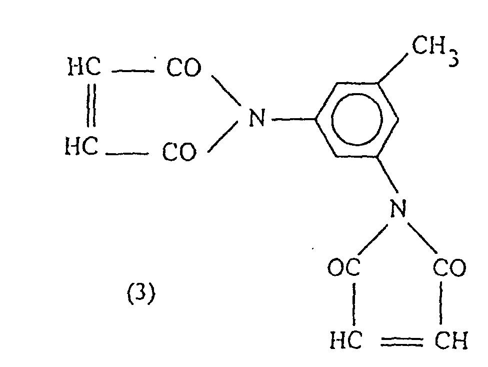 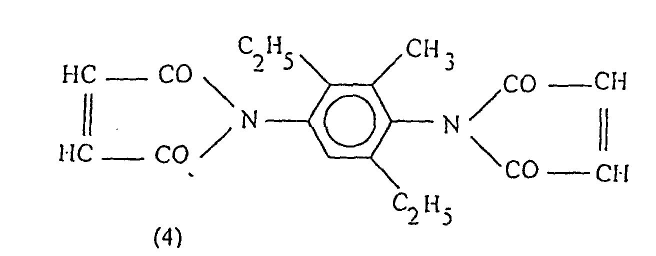 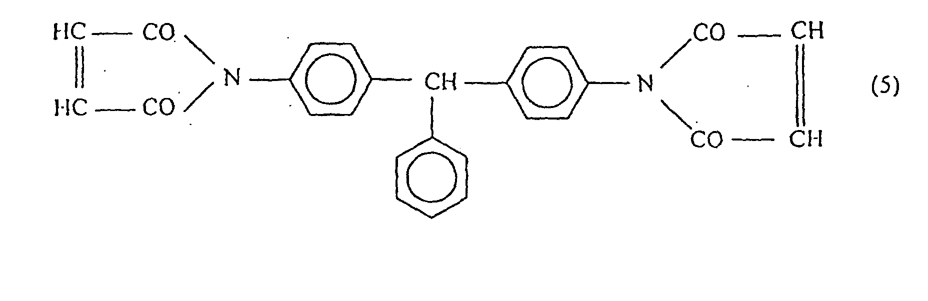 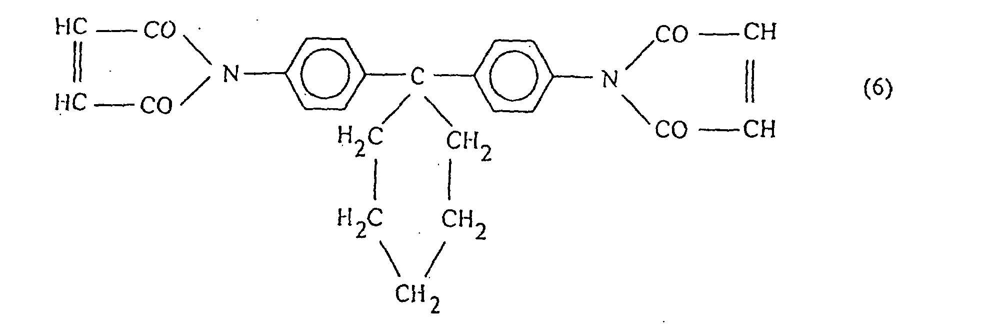 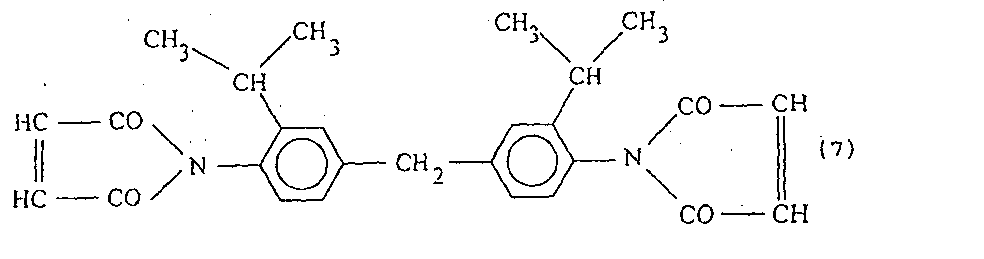 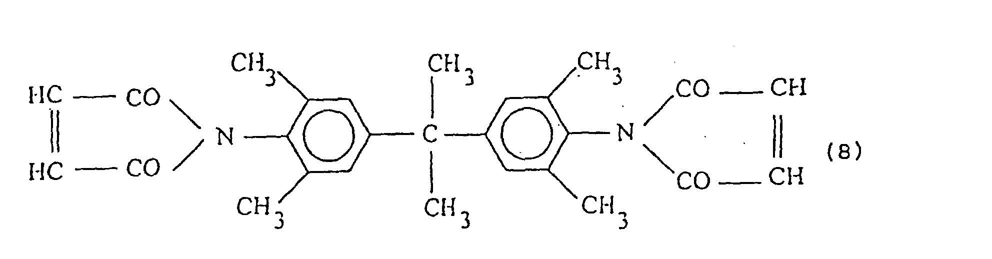 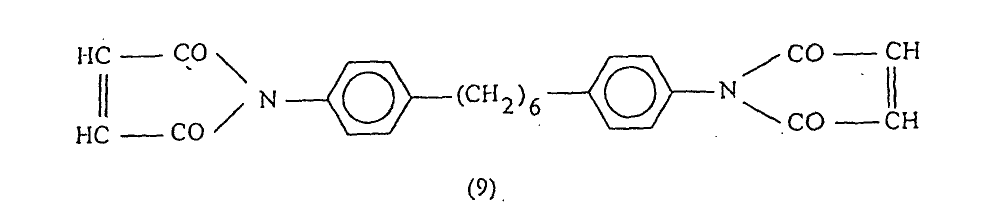 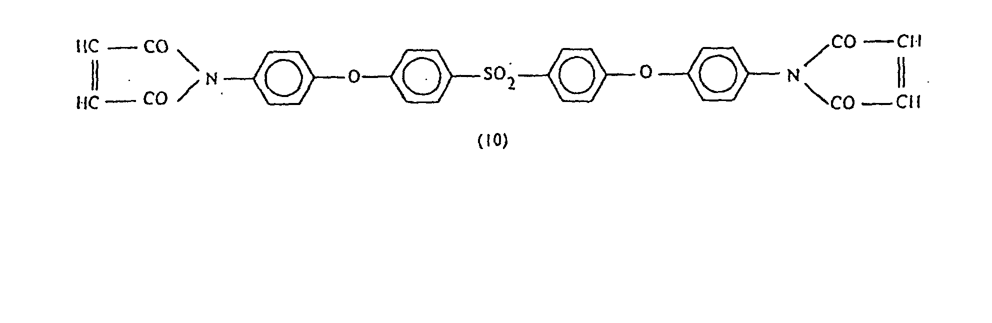 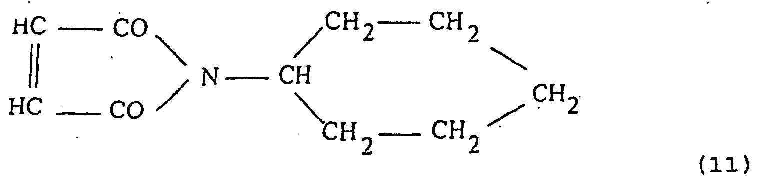
(c) an acrylate reagent consisting of one or more compounds with the general formula :
(CH₂ = CR₁ - CO - O) n⁻⁻⁻⁻G (II)
in which :
- the R₁ symbol represents a hydrogen atom or the methyl group ;
- n represents a whole or fractional number of at least 1 and of no more than 8 ;
- the G symbol represents a valence organic group, made up of a saturated aliphatic hydrocarbonated group, either linear or branched, having from 1 to 30 carbon atoms and possibly containing one or more oxygen atoms and/or one or more free hydroxyl functions ; an aromatic group (of arylic or arylaliphatic type) having 6 to 150 carbon atoms made up of one benzene nucleus which may be substituted by one to three alkyl groups having 1 to 5 carbon atoms, or of several benzene nuclei possibly substituted by 1 to 3 alkyl groups with 1 to 5 carbon atoms, interconnected by a single bond, an inert group or an alkylene group having 1 to 3 carbon atoms, said aromatic group possibly containing at several points in its structure one or more oxygen atoms and/or one or more free hydroxyl functions, the free valence of valences of the aromatic G group possibly being carried by a carbon atom of an aliphatic chain and/or by a carbon atom of a benzene nucleus ; and
(d) a reagent comprising a double vinyl bond chosen from among vinylpyridines, N-vinylpyrrolidone-2, vinyl-tetrahydrofuranne, styrene and their mixtures.

3. Composition in accordance with claim 2, in which constituent (a) is 4.4' diphenyl methane -bis-maleimide, constituent (b) is 1.3 toluene -bis-maleimide, constituent (c) is a mixture of the following acrylates :
- the acrylate with the formula : 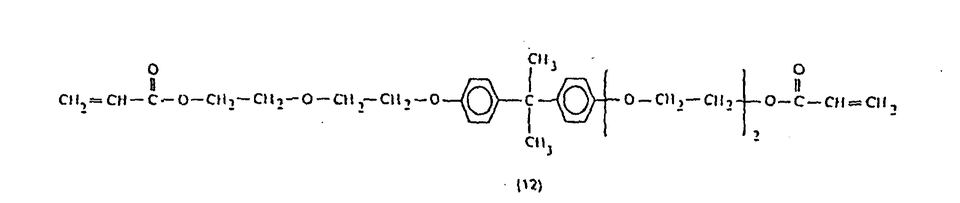
- the acrylate with the formula : 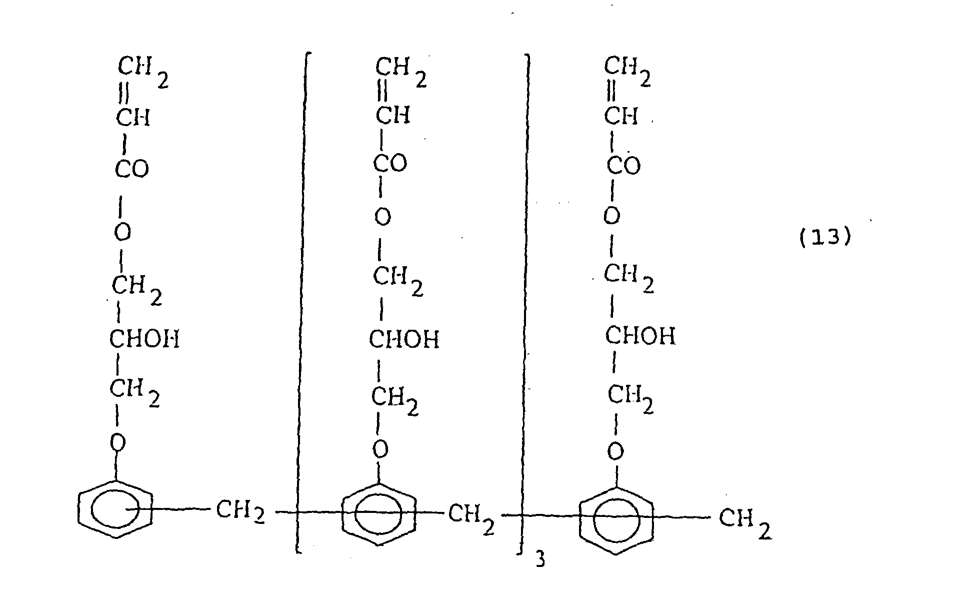
- the triacrylate of propane trimethylol,
and constituent (d) is 1-vinyl-2-pyrrolidone

4. Composition in accordance with any of claims 1 to 3, comprising 20 to 50 parts by weight of reactive diluent per 100 parts by weight of maleic reisn.

5. Composition in accordance with any of claims 1 to 4, comprising in addition 10 to 50 parts by weight of a plasticizer per 100 parts by weight of maleic resin.

6. Composition in accordance with claim 5, in which the plasticizer is a bis-allylic resin.

7. Composition in accordance with claim 6, comprising 40 parts by weight of dipentaerythritol pentacrylate and 20 parts by weight of bis-allylic resin per 100 parts by weight of maleic resin.

8. Method of manufacture of a composite material comprising a fibrous reinforcement dispersed in an organic matrix, **characterized in that** it comprises the following stages :
1) impregnating a fibrous reinforcement with a setting composition in accordance with any one of claims 1 to 7, at temperature of 30 to 90°C, and
2) setting the composition by ionization by means of an electron or X ray beam.

9. Method in accordance with claim 8, in which the ionization dose used in the second stage is 100 to 350 kGy.

10. Method in accordance with either one of claims 8 and 9, in which the fibrous reinforcement is made up of carbon fibres.
